# EUROPÄISCHE PATENTSCHRIFT

(11) **EP 0 695 709 B1**
(45) Veröffentlichungstag und Bekanntmachung des Hinweises auf die Patenterteilung: **11.04.2001**
(21) Anmeldenummer: 95110216.9
(22) Anmeldetag: 30.06.1995
(51) Int. Cl.: B65H 19/18, B65H 19/10

(54) **Klebestreifen zum Befestigen eines Papierbahnanfanges einer Vorratspapierbahnrolle**
Adhesive tape for fastening the leading end of a paper web of a replacement paper web roll
Ruban adhésif pour attacher le début d'une bande de papier d'une bobine de bande de papier

(30) Priorität: 04.07.1994 DE 4423387
(43) Veröffentlichungstag der Anmeldung: 07.02.1996
(73) Patentinhaber: Koenig & Bauer Aktiengesellschaft, 97080 Würzburg (DE)
(72) Erfinder: Trutschel, Hartwig Horst, D-97076 Würzburg (DE)

(56) Entgegenhaltungen:
- EP-A- 0 418 527
- DE-U- 9 201 286
- GB-A- 2 235 883
- US-A- 2 149 833
- US-A- 4 768 810
- US-A- 4 905 924

## Beschreibung

Die Erfindung betrifft einen Klebestreifen zum Befestigen eines Papierbahnanfanges einer Vorratspapierbahnrolle entsprechend dem Oberbegriff des Anspruches 1.

Durch die EP 04 18 527 A2 ist ein dreizoniger Klebestreifen bekannt, welcher im Querschnitt gesehen, eine beidseitig klebende Zone und einseitig klebende Zone aufweist, die durch eine nichtklebende mittlere Zone getrennt ist. Die mittlere, nichtklebende Zone, weist in Längsrichtung des Klebestreifens gesehen, eine Perforation auf. Solche Klebestreifen werden zur Vorbereitung einer Klebestelle einer Vorratspapierbahnrolle für den fliegenden Rollenwechsel z. B. bei Rollenrotationsdruckmaschinen verwendet, indem der Anfang der Papierbahn so auf der zweiten Lage der Vorratspapierbahnrolle mittels des dreizonigen Klebestreifens befestigt wird, daß die perforierte, nichtklebende Zone über dem Anfang der Papierbahn zu liegen kommt. Das Verbinden des Anfanges der Vorratspapierbahnrolle mit einer laufenden Papierbahn zwecks Rollenwechsel erfolgt bekannterweise mittels der Vorderseite der beidseitig klebenden Zone des Klebestreifens, wobei der Klebestreifen nachfolgend an der Perforationslinie längsgetrennt wird.

Nachteilig bei diesem über den Anfang der Papierbahn geklebten Klebestreifen ist jedoch, daß der Klebestreifen im Bereich der Perforation während der Beschleunigung der Vorratspapierbahnrolle auf Papierbahnlaufgeschwindigkeit, die z. B. 15 m/s betragen kann, in zunehmender Weise mit der sich erhöhenden Drehzahl Luft zwischen den Anfang und die zweite Lage der Papierbahn einläßt, was infolge der dadurch auftretenden Kräfte am Umfang der äußeren Lage der Papierbahn zum Reißen derselben führen kann.

Die US 21 49 833 A beschreibt einen Klebestreifen zum Halten eines Anfanges einer Papierbahn auf einer zweiten Lage einer Vorratsrolle. Dieser Klebestreifen weist eine Perforation auf.

Der Erfindung liegt die Aufgabe zugrunde, einen perforationslosen Klebestreifen zum Befestigen eines Papierbahnanfanges einer Vorratspapierbahnrolle zu schaffen, welcher beim fliegenden Rollenwechsel zuverlässig getrennt wird.

Erfindungsgemäß wird diese Aufgabe durch die Merkmale des kennzeichnenden Teils des Anspruches 1 gelöst.

Durch die Erfindung werden insbesondere folgenden Vorteile erzielt: Durch den erfindungsgemäßen Klebestreifen wird während der Beschleunigungsphase der Vorratspapierbahnrolle ein Eindringen von Luft zwischen die äußeren Papierbahnlagen vermieden, so daß kein ungewolltes Aufreißen des Papierbahnanfanges erfolgt. Somit muß nicht zum Verbinden zweier Papierbahnen die Papierbahn-Laufgeschwindigkeit reduziert werden.

Die Erfindung wird nachfolgend an einem Ausführungsbeispiel näher erläutert. Die zugehörige Zeichnung zeigt den Ausschnitt eines Querschnittes durch die obersten Lagen einer Vorratspapierbahnrolle in vergrößerter Darstellung, wobei der Anfang der Papierbahn mittels eines erfindungsgemäßen Klebestreifens auf einer zweiten Lage der Vorratspapierbahnrolle befestigt ist.

Ein Papierbahnanfang 1 ist auf einer zweiten Lage 2 einer angedeuteten Papierbahnrolle mittels eines mit insgesamt 3 bezeichneten Klebestreifens befestigt. Der Klebestreifen 3 weist drei sich in seiner Längsachsenrichtung parallel zueinander verlaufende Querschnittszonen a, b, c auf, nämlich eine erste äußere, beidseitig klebende Querschnittszone a, eine zweite äußere, einseitig klebende Querschnittszone b sowie eine mittlere, nichtklebende Querschnittszone c. Über die gesamte Breite a, b, c des Klebestreifens 3 erstreckt sich der Querschnitt eines Klebemittelträgers 4, welcher in der ersten äußeren Querschnittszone a beidseitig und in der zweiten äußeren Querschnittszone b einseitig mit einem bekannten Klebemittel 6, 7 bzw. 8 versehen ist. Der Klebemittelträger 4 kann in der mittleren, nicht klebenden Querschnittszone c eine sich in Längsachsenrichtung des Klebestreifens 3 erstreckende Längsrillung 9 aufweisen, welche im Fall der Verwendung von Papier als Klebemittelträger 4 einen Bruch der Papierfaser bewirkt. Mindestens eine Schnittlinie 11 des Papierbahnanfanges 1 befindet sich in der mittleren Querschnittszone c. Die Schnittlinie 11 der Papierbahn verläuft vorzugsweise in axialer Richtung der Vorratspapierbahnrolle. Das Material des Klebemittelträgers 4 weist eine geringere Reißfestigkeit gegenüber der zu verarbeitenden Papierbahn auf. Die Reißfestigkeit des Klebemittelträgers 4 liegt etwa zwischen drei und sieben daN/m, während die Reißfestigkeit der zu verarbeitenden Papierbahn zwischen 160 und 200 daN/m liegt. Vorzugsweise wird Seidenpapier als Klebemittelträger 4 eingesetzt. Die Vorratspapierbahnrolle wird vor dem Verbinden mit einer laufenden Papierbahn in Uhrzeigerrichtung D beschleunigt.

### Teileliste

- 1: Papierbahnanfang
- 2: Lage, zweite
- 3: Klebestreifen
- 4: Klebemittelträger (3)
- 5: -
- 6: Klebemittel (3, a)
- 7: Klebemittel (3, a)
- 8: Klebemittel (3, b)
- 9: Längsrillung (c)
- 10: -
- 11: Schnittlinie (1)

- D: Laufrichtung, Vorratspapierbahnrolle

- a: Querschnittszone, äußere, beidseitig klebend (3)
- b: Querschnittszone, äußere, einseitig klebend (3)
- c: Querschnittszone, mittlere, nicht klebend (3)

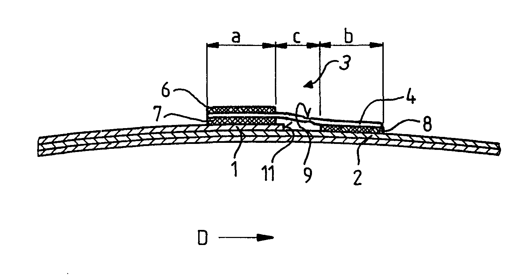

## Patentansprüche

1. Klebestreifen zum Befestigen eines Papierbahnanfanges einer Vorratspapierbahnrolle zum Verbinden mit einer laufenden Papierbahn, wobei der Klebestreifen drei Querschnittszonen aufweist, eine äußere beidseitig klebende Zone, eine äußere einseitig klebende Zone sowie eine mittlere, nichtklebende Zone, dadurch gekennzeichnet, daß ein die drei Querschnittszonen (a, b, c) übergreifender Klebemittelträger (4) aus einem Material mit einer Reißfestigkeit zwischen zwei und sieben daN/m besteht und keine Perforation aufweist.

2. Klebestreifen nach Anspruch 1, dadurch gekennzeichnet, daß der Klebemittelträger (4) in seiner mittleren Zone (c) eine sich in Richtung Längsachse des Klebestreifens (3) erstreckende Längsrillung (9) aufweist.

3. Klebestreifen nach Anspruch 1, dadurch gekennzeichnet, daß das Material des Klebemittelträgers (4) aus Seidenpapier besteht.

## Claims

1. Adhesive strip for fixing a paper web start of a fresh paper web reel to be joined to a running paper web, the adhesive strip having three cross-sectional zones, an outer, double-sided adhesive zone, an outer, single-sided adhesive zone and a central, non-adhesive zone, characterized in that an adhesive carrier (4) reaching over the three cross-sectional zones (a, b, c) consists of a material with a tearing strength between two and seven daN/m and has no perforation.

2. Adhesive strip according to Claim 1, characterized in that the adhesive carrier (4) has, in its central zone (c), longitudinal grooving (9) extending in the direction of the longitudinal axis of the adhesive strip (3).

3. Adhesive strip according to Claim 1, characterized in that the material of the adhesive carrier (4) consists of tissue paper.

## Revendications

1. Ruban adhésif pour attacher le début d'une bande de papier d'une bobine de bande de papier de réserve, pour assurer la liaison à une bande de papier en défilement, le ruban adhésif présentant trois zones de section transversale, une zone extérieure adhésive sur les deux faces, une zone extérieure adhésive sur une face, ainsi qu'une zone médiane, non adhésive, caractérisé en ce qu'un support d'adhésif (4), couvrant les trois zones de section transversale (a, b, c), est constitué d'un matériau ayant une résistance au déchirement comprise entre deux et sept daN/m et ne présente aucune perforation.

2. Ruban adhésif selon la revendication 1, caractérisé en ce que le support d'adhésif (4) présente, dans sa zone médiane (c), une cannelure ou striure longitudinale (9) s'étendant dans la direction de l'axe longitudinal du ruban adhésif (3).

3. Ruban adhésif selon la revendication 1, caractérisé en ce que le matériau du support d'adhésif (4) est constitué de papier de soie.
